# EUROPEAN PATENT SPECIFICATION

(11) **EP 3 421 914 B1**
(45) Date of publication and mention of the grant of the patent: **10.05.2023**
(21) Application number: 17382416.0
(22) Date of filing: 29.06.2017
(51) Int. Cl.: F26B 3/06, F26B 17/12, F26B 25/12

(54) **VERTICAL DRYER**
VERTIKALER TROCKNER
SÉCHOIR VERTICAL

(43) Date of publication of application: 02.01.2019
(73) Proprietor: Suez International, 92040 Paris La Défense Cedex (FR)
(72) Inventor: Permuy Dobarro, Juan, 12560 Benicassim, Castellón (ES); Prats Prats, Néstor, 12006 Castellón (ES)
(74) Representative: IPAZ

(56) References cited:
- FR-A- 899 348
- GB-A- 275 760
- US-A- 1 127 974
- US-A- 1 151 268
- US-A- 2 764 819

## Description

### Field of the invention

This invention relates to a vertical dryer particularly suitable for granular or chopped materials such as biomass, cereals, bagasse, grains, municipal waste or other shredded materials, the plastic fraction of municipal refuse (RDF), etc.

### Background of the invention

Known dryers for granular materials can be classified into the following types:
- Cylinder or drum dryers, fed with high-temperature hot air, namely, greater than 100 °C, obtained by mixing combustion gases and outside air.
- Horizontal belt dryers.
- Drying towers, in which the material to be dried falls in a vertical stream by the force of gravity, past baffles that direct air toward the material, the air generally being combustion gases mixed with outside air.

These drying conditions have several drawbacks.
- High-temperature drying using mixtures of combustion gases and outside air lowers the quality of the dried product. More specifically, drying air hotter than 100 °C degrades product properties.
- Material residence time in drum dryers and drying towers is quite short in order to reduce equipment size so that it is technically and economically viable.
- Belt dryers operated at high temperatures, i.e., above 100 ºC, could dry at low temperatures but do not do so in order to decrease equipment size and because of limitations on the passage of air through the material layer and the conveyor belt.
- Uniform drying of the material cannot be achieved, e.g., because of short residence times or reduced air flow.
- Using high temperatures, namely, greater than 100 ºC, gives rise to the risk of producing an explosive atmosphere.
- Poor utilisation of waste heat from other processes, because equipment with high working temperatures can only make use of high-temperature waste heat.
- Little or no capability of recycling the air inside the drier.

US1151268 A, FR899348 A, US 2764819 A, US1127974 A and GB 275 760 A disclose vertical dryers according to the prior art.

### Summary of the invention

The vertical flow dryer of the invention is a vertical dryer according to claim 1.

Thus, in the vertical dryer of this invention, the material to be dried glides vertically by force of gravity between permeable walls that allow passage of a crosswise stream of air, and the material to be dried is confined between the two permeable walls, which have a specific thickness for each material type during the drying operation, which contributes to uniformity of the dried product. Accordingly, the product is dried by convection thanks to the stream of hot air flowing crosswise to the permeable walls. The material is not dried through contact with a hot surface but by convection, which adds to the safety of the system, because contact with a hot surface at high temperatures can cause the material to form dust, potentially resulting in explosive atmospheres.

The arrangement of the vertical dryer of the invention yields highly uniform material drying achieved by crosswise circulation of airflow combined with passage of a high flow of air through the permeable walls, these two factors working together to drive off moisture from the material even at low temperatures. The capacity for long residence times thanks to the holding and discharge system likewise contributes to uniform drying of the material by affording sufficient time for the moisture in the internal layers of the material to rise into the outer layers.

As a result, the dried product retains all its properties, because the dryer of the invention makes possible low-temperature convection drying.

The holding and discharge system affords controlled regulation of the discharge rate of the material being dried and hence allows exposure time of the material to the drying process to be regulated. By the same token, thanks to the holding and discharge system, the material being dried passes through the entire dryer between the permeable walls and is thus exposed to potentially differing drying conditions that may exist along the height of the dryer, which also contributes to more uniform drying of the material. Discharge of the product may be effected by an automatic system and may take place continuously or stepwise, enabling the residence time of the material being dried to be precisely regulated.

One of the advantages of the dryer of this invention is the potential to make use of waste heat from, for example, combustion gases, as well as from hot water from cogeneration systems and the organic Rankine cycle (ORC). In view of the low working temperature, waste heat can be recovered from any temperature above the temperature needed for drying. At the same time, the dryer of the invention can also be operated at high air flow temperatures, i.e., those greater than 100 ºC.

A further advantage of the vertical dryer is that it has minimal moving parts such as conveyor belts, drums, augers or brushes, etc., thereby reducing wear and facilitating equipment maintenance.

### Description of the drawings

Some drawings are provided to supplement the description for a better understanding of the invention. The Figures are an integral part of the description and illustrate an embodiment of the invention.
Figure 1 is a side view of a vertical section of one embodiment of the vertical dryer.
Figure 2 is a plan view of a horizontal section of one embodiment of the vertical dryer according to Figure 1.
Figure 3 is a side view of the vertical section of the embodiment depicted in Figure 1 showing a first embodiment of the air flow, in which the drying air is partially recycled while some is replaced by outside air.
Figure 4 is a side view of the vertical section of the embodiment depicted in Figure 1 showing a second embodiment of the air flow, in which no drying air is recycled and all the air used is outside air.
Figure 5 is a side view of the vertical section of the embodiment depicted in Figure 1 showing a third embodiment of the air flow, with a closed air circuit with internal condensation, no addition of outside air, and no discharge of air.

### Detailed description of the invention

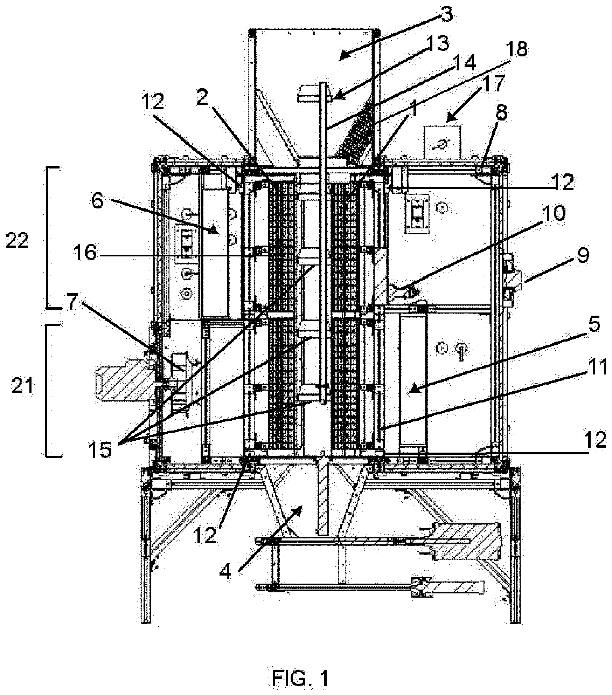

Figure 1 depicts a cross-section of an embodiment of the vertical dryer according to the invention. The figures shows:
- A first permeable wall (1) and a second permeable wall (2) arranged so as to confine a material to be dried in between the two (1, 2) and to allow a stream of air to pass through crosswise to the two walls (1, 2) to dry the confined material. The two permeable walls (1, 2) have respective lengthwise ends conforming an inlet and an outlet for the material being dried.
- A hopper (3) adapted to be filled with the material to be dried and to feed that material into the space between the two permeable walls (1, 2) by force of gravity, the hopper (3) being located at the lengthwise end of the said permeable walls (1, 2) at the inlet for the material, i.e., at the upper end of the device. Hopper (3) further allows the material to be fed in either continuously or in a stepwise manner, such that there is a continuous stream of material to be dried inside the two permeable walls (1, 2).
- A holding and discharge system (4) adapted to retain the material being dried in the space between the two permeable walls (1, 2) and to discharge the material being dried by gravity, the holding and discharge system (4) being located at the lengthwise end of the permeable walls (1, 2) at the outlet for the dried product, i.e., at the lower end of the device.

In the embodiment shown in the figures, the forced air system comprises:
- A first section (22) running lengthwise along the permeable walls (1, 2) from the lengthwise end conforming the material inlet. In this first section (22) the forced air system is configured to move the stream of air crosswise to the permeable walls (1, 2). In the embodiment, this would be the upper section, that is, the region in which the material to be dried first comes into contact with the air stream, where initial drying of the material to be dried takes place.
- A second section (21) running lengthwise along the permeable walls (1, 2) from the preceding first section (22) to the lengthwise end conforming the material outlet. In this second section the forced air system is configured to move the stream of air crosswise to the permeable walls (1, 2) in a direction opposite to that of the first section (22), i.e., both sections (21, 22) define crosswise air flows. In the embodiment, this second section (21) would be the lower section of the dryer, in which the material to be dried comes into contact with the air stream flowing in the opposite direction from that in the first section (22), where final drying of the material takes place.

The advantage afforded by this crosswise flow forced air system is that the material is dried in two stages, a first stage adjacent to the inlet end for the material to be dried, in which the material has more moisture and goes through a first drying stage where, in the embodiment illustrated, the air stream, having certain specified conditions, flows from the second permeable wall (2) towards the first permeable wall (1). Subsequently, it descends to a second stage in which the material is dried completely by an air stream having different conditions flowing from the first permeable wall (1) towards the second permeable wall (2), thereby crossing the material again in the opposite direction to complete the drying process. This crosswise flow contributes to uniform drying of the material, in that drying takes place on two opposing surfaces.

Further, the embodiments depicted comprise at least one heat transfer member (5, 6) configured to heat the air stream before it flows crosswise through the permeable walls (1, 2). Specifically, in the example embodiments shown, the vertical dryer comprises at least a first heat transfer member (6) located in the first section (22) of the forced air system and a second heat transfer member (5) located in the second section (21) of the forced air system, both designed to heat the air stream before it flows crosswise through the permeable walls (1, 2). In this way the air is heated by heat transfer member (6) in readiness for an initial, upper drying stage, after which the air is reconditioned by heat transfer member (5) and then goes on to a second material drying stage.

The heat transfer members (5, 6) are located next to and lengthwise to the outer surfaces of the permeable walls (1, 2) without being joined to the said walls (1, 2). Figure 1 depicts a heat transfer member (6) located before the second permeable wall (2) spanning the first section (22) of the forced air system before the air first passes through the material, along with a second heat transfer member (5) located before the first permeable wall (1) spanning the second section (21) of the forced air system before the air passes through the material to be dried in a second drying stage.

In the embodiment shown, the heat transfer members (5, 6) are preferably water to air heat exchangers.

As stated in the overview of the invention, in this example embodiment the forced air system is in charge of propelling the necessary amount of air for the drying process through the permeable walls (1, 2), the material to be dried, and the heat transfer members (5, 6), overcoming the system's overall load loss.

In the example embodiment shown, to be able to perform this function, the forced air system comprises suction and impeller means (7) next to one of the permeable walls (1, 2) designed to draw or blow the air stream crosswise to the permeable walls (1, 2).

Specifically, the forced air system comprises a fan (7) attached next to but not integral with the second permeable wall (2) and opposite the heat transfer member (5). The said means are designed to draw the air flow through second section (21) from the first permeable wall (1) to the second permeable wall (2) and to blow the air stream towards the first section (22) of the forced air system from the second permeable wall (2) to the first permeable wall (1). In this way the air stream is impelled from the lower region of the dryer to the upper region.

Accordingly, having in mind the crosswise flow, initially the air is indirectly heated by, for example, a water to air heat exchanger (6). The heated air then makes a first pass through the moister material located in the upper section (22) of the dryer. After this first drying stage, the air is reconditioned by another indirect reheating before making a second pass through the partially dry material located in the lower section (21).

According to the example embodiment, the vertical dryer comprises a first support structure (11) that supports the permeable walls (1, 2) that contain the material to be dried and an outer housing (8) that encompasses the support structure (11), the forced air system, and the heat transfer members (5, 6), if any. The support structure (11) is fastened to the outer housing (8) by elastic means (12), such that the connection between the two elements is not rigid.

Placing the heat transfer members (5, 6), water-air heat exchangers in the example embodiment, inside the dryer housing (8) helps to lower the relative humidity of the air, so that the air can take up more water, such that the hot air not only heats the material but also absorbs the moisture released by the material.

The vertical dryer may comprise a vibrating or beater element (10) connected to the said support structure (11) configured to transmit a vibration to the support structure (11) and then to the permeable walls (1, 2) to help keep the material to be dried falling and thus to help keep the permeable walls (1, 2) clean.

There are various air stream circulation possibilities: there may be partially recycled air, no air recycling, or a closed circuit with completely recirculating air, i.e., there may be an inlet (9) for outside air that is mixed with part of the recirculated air, or there may be no recirculation of air, with all air coming from the outside (19), or all the air may be recirculated thanks to condensation of the water extracted from the material by a cold transfer member (20).

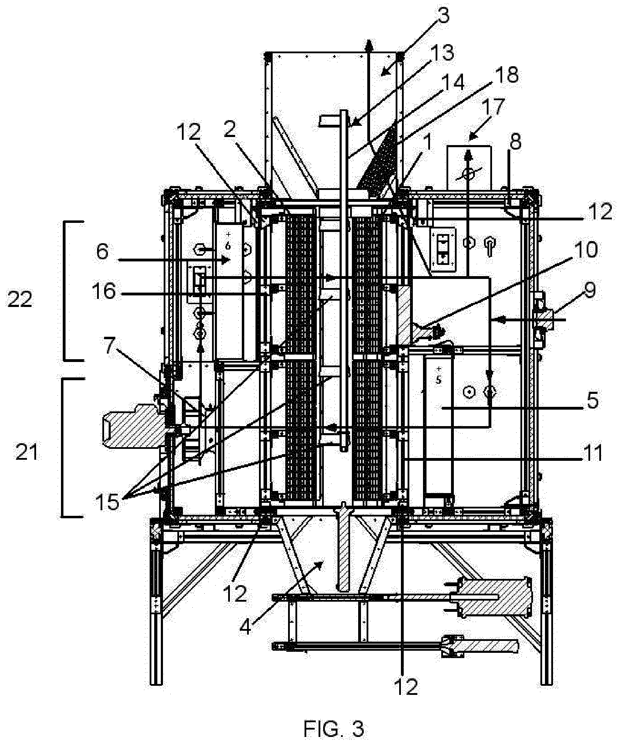

In the embodiments shown in Figures 1 and 3, the outer housing (8) comprises an air inlet (9) that lets air from outside the housing (8) into the forced air system. The function of the air inlet (9) is to allow in outside air under pressure depending on the moisture and temperature conditions in the drying chamber, replacing the air that leaves the vertical dryer through outlets (17, 18).

In these embodiments, the air stream is partially recycled to recover the relative humidity. Air inlet (9) is pressurised and air enters through the upper part of the dryer to mix in with the recirculated flow leaving the first permeable wall (1) after initial drying of the material. Once in the lower section (21) of the dryer and due to the suction by the suction-impeller means (7), the air stream passes first through the heat exchanger (5), where it is heated, and then through the first permeable wall (1), the material to be dried, and the second permeable wall (2). This cycle makes up the second material drying stage.

The suction-impeller means (7) blow the air coming out towards the upper section (22) of the dryer, where it is heated by the heat exchanger (6), passes through the second permeable wall (2), the material to be dried, and the first permeable wall (1). This cycle would configure the first material drying stage.

The hopper (3) of the first embodiment comprises a portion of its wall that is permeable (18) so part of the air stream that is vented to the outside is used to preheat the material to be dried. To this end, the outer housing (8) comprises an interior air outlet in communication with the outlet of the first permeable wall (1) and the hopper (3), such that this portion of the air preheats the material to be dried.

The outer housing (8) also comprises an air outlet control valve (17) located in connection with the outlet of the first permeable wall (1) which vents air to the outside of the housing (8). Air let in through the air inlet (9) offsets the air vented by the air outlet control valve (17) and the hopper (3) outlet (18).

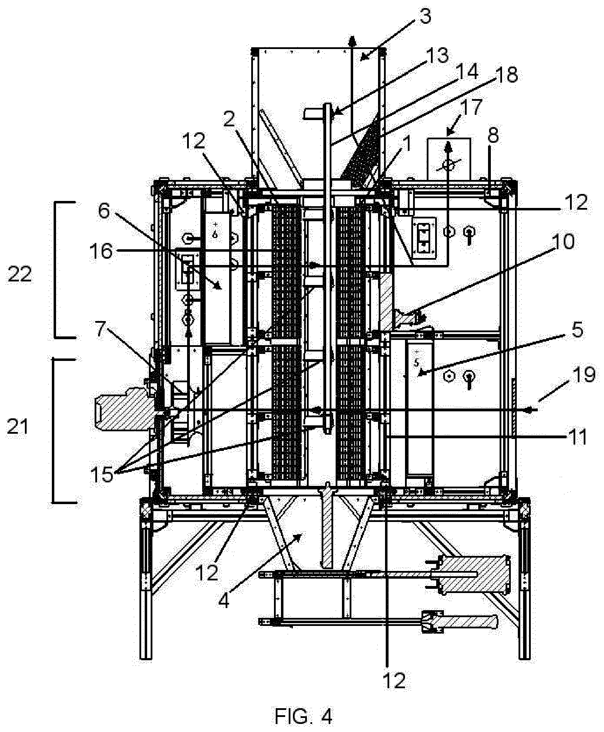

The drying air is not recycled in the embodiment shown in Figure 4. The outer housing (8) comprises an outside air inlet (19), which is not pressurised in the embodiment. The inlet (19) is located in the lower part of the dryer, and the air flow pattern is similar to that in the embodiment shown in Figure 3, except that all the air is vented after it has passed through the permeable wall (1) towards the outlet (18) in the hopper (3) and through the valve (17). This type of vertical dryer is suitable for low-temperature applications, for instance, pre-drying of biomass to be burned, in situations in which the waste water temperature is generally low.

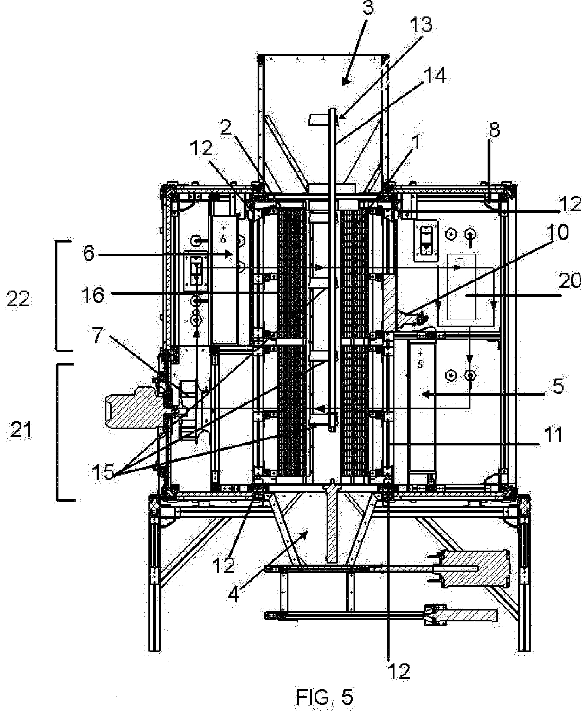

In the embodiment shown in Figure 5, there is a closed air circuit with interior condensation. To that end the dryer comprises a cold transfer member (20) to eliminate, through condensation, the water absorbed into the air stream from the material being dried. The cold transfer member (20) is located next to the first permeable wall (1) diagonally across from the suction and impeller means (7) and condenses the water contained in part of the air stream used in the first drying stage, thus removing the moisture from the air. The condensed water is shunted to the outside of the housing (8). The rest of the air used in the first stage is mixed with the air leaving the cold transfer member (20), thereby generating an air mixture that is pulled to the next stage by suction. This vertical dryer would be suitable for certain materials, such as rice, seeds, medicinal plants, etc. It would also make it possible to work at very low temperatures, below 65 ºC. For this option, it could be highly advisable for the system to be equipped with a source of heat, for instance, a heat pump, so that it can take advantage of both heat and cold.

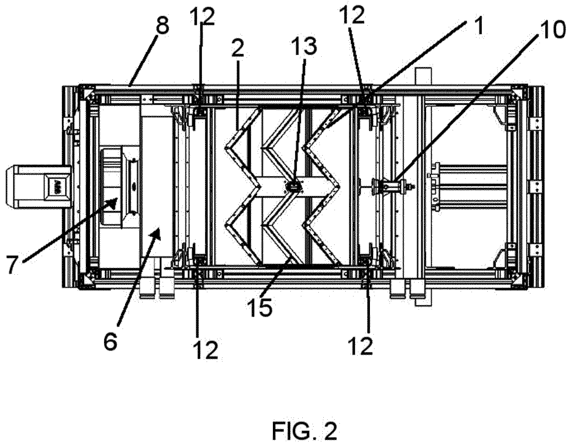

The cross-section of the permeable walls (1, 2) in the embodiment comprises a zigzag shape as depicted in Figure 2. The advantage of a zigzag-shaped cross-section is that it affords a larger area for the air to contact the material to be dried, thereby increasing efficiency and uniformity of drying. A straight cross-section or a cross-section having any other shape would also be feasible.

The optimal distance between the permeable walls (1, 2) and the shape of the walls in cross-section may vary according to the type of material to be dried and the conditions of the material, and consequently the permeable walls (1, 2) may be movable in a crosswise direction, such that the distance between the two walls (1, 2) is adjustable, varying with the thickness of the material confined between them, which affords better adjustment to the needs of each type of material.

In the embodiment, the permeable walls (1, 2) comprise a screen, for instance, one made of metal, attached to a rectangular supporting lattice (16) that may be made of metal or thermoplastic.

In one particular embodiment, the drier comprises a pusher assembly (13) running lengthwise in between the two permeable walls (1, 2). The advantage of this arrangement is that it prevents the material to be dried from becoming clogged in between the permeable walls (1, 2). The said pusher assembly (13) comprises a vertical shaft (14) that may be moved in a lengthwise direction, that is, it is capable of up and down motion, and it comprises a set of pusher elements (15) arranged crosswise along the lengthwise shaft (14), which elements are able to push the material as the shaft (14) moves up and down. The said pusher elements (15) are wedge-shaped on top and flat on the bottom, such that on being moved downwards the pusher assembly (13) will drag the material towards the discharge system (4).

In one embodiment, the vertical dryer comprises air temperature and air humidity controls. Control is performed by wet and dry bulb temperature sensors located at various points inside the dryer, enabling the wet bulb and dry bulb temperature differential to be calculated.

Specifically, automatic control of the final moisture content of the product is achieved indirectly by measuring the humidity of the drying air (as the air exits after passing through the material). The more humid the air, the greater the moisture content of the material, and vice versa. The wet bulb and dry bulb temperature differential of the air is the machine parameter setting selected by the operator, whereby the dryer is capable of automatically regulating the residence time of the material in the dryer so that it is shorter or longer, and so forth.

There could also be controls for the circulating air stream volume and the air flow rate through the material. Equipment size is determined to achieve a given air flow rate through the material. The air circulation system is equipped with sensors to measure the pressure differential, which is used to calculate the flow volume (and indirectly the flow rate). The fans are equipped with variable frequency drives to adjust flow/load loss to the material, along with the amount of outside air.

## Claims

1. A vertical dryer, comprising:
- a first permeable wall (1) and a second permeable wall (2) configured so as to confine a material to be dried in between the two walls (1, 2) and to allow a stream of air to pass through crosswise to the two walls (1, 2) to dry the confined material, both permeable walls (1, 2) comprising both lengthwise ends corresponding to the inlet and outlet for the material to be dried,
- a holding and discharge system (4) adapted to retain the material being dried in the space between the two permeable walls (1, 2) and to discharge the material being dried by gravity, the holding and discharge system (4) being located at the lengthwise end of the permeable walls (1, 2) at the outlet for the dried product,
- a forced air system configured to move a stream of air through the permeable walls (1, 2) and the material to be dried, the forced air system comprising:
- a first section (22) that extends lengthwise along the permeable walls (1, 2) from the lengthwise end conforming the material inlet, the forced air system being configured to move the air stream in a direction crosswise to the permeable walls (1, 2), and
- a second section (21) that extends that extends lengthwise along the permeable walls (1, 2) from the first section (22) to the lengthwise end conforming the material outlet, the forced air system being configured to move the air stream in a direction crosswise to the permeable walls (1, 2) opposite to that of the first section (22), such that both sections (21, 22) define crosswise air flows,
- a suction and impeller means (7) next to the second permeable wall (2) configured to draw the air stream from the first permeable wall (1) towards the second permeable wall (2) in the second section (21) and to blow the air stream towards the first section (22) of the forced air system from the second permeable wall (2) towards the first permeable wall (1),
- a first heat transfer member (6) configured to heat the air stream before it flows crosswise through the permeable walls (1, 2),
- the first heat transfer member (6) located in the first section (22) of the forced air system,
**characterised in that** it comprises a second heat transfer member (5) located in the second section (21) of the forced air system, the first and the second heat transfer member (5, 6) being configured to heat the air stream before it flows crosswise through the permeable walls (1, 2) and the forced air system being configured to move the stream of air such that the air is heated by the first heat transfer member (6) for an initial drying stage of the material located in the first section (22) after which the air is reconditioned by the second heat transfer member (5) for a second drying stage of the material located in the second section (21).

2. A vertical dryer, according to claim 1, **characterised in that** the first heat transfer member (6) extends lengthwise to the second permeable wall (2) along the first section (22) of the forced air system and the second heat transfer member (5) extends lengthwise to the first permeable wall (1) along the second section (21) of the forced air system.

3. A vertical dryer, according to any of claims 1 to 2, **characterised in that** the heat transfer member (5, 6) is a heat exchanger.

4. A vertical dryer, according to any of the preceding claims, **characterised in that** it comprises a first support structure (11) that supports the permeable walls (1, 2).

5. A vertical dryer, according to claim 4, **characterised in that** it comprises an outer housing (8) that encompasses the support structure (11) and the forced air system, the outer housing (8) being attached to the support structure (11) by elastic means (12).

6. A vertical dryer, according to claim 5, **characterised in that** it comprises a vibrating element (10) in connection with the support structure (11) configured to transmit a vibration to the said support structure (11) to help keep the material to be dried falling and to help keep the permeable walls (1, 2) clean.

7. A vertical dryer, according to claim 5, **characterised in that** the outer housing (8) comprises an air inlet (9, 19) configured to let in air from outside the housing (8).

8. A vertical dryer, according to claim 5, **characterised in that** the outer housing (8) comprises an air outlet control valve (17) located in connection with the outlet of the first permeable wall (1) which vents air to the outside of the housing (8).

9. A vertical dryer, according to any of the preceding claims, **characterised in that** it comprises a hopper (3) adapted to be filled with the material to be dried and to feed that material into the space between the two permeable walls (1, 2), the hopper (3) being located at the lengthwise end of the said permeable walls (1, 2) at the inlet for the material.

10. A vertical dryer, according to claim 9, **characterised in that** the hopper (3) comprises a portion of its wall that is permeable (18), such that part of the air stream passes through to preheat the material to be dried.

11. A vertical dryer, according to any of the preceding claims, **characterised in that** it comprises a cold transfer member (20) to eliminate, through condensation, the water absorbed into the air stream from the material being dried.

12. A vertical dryer, according to any of the preceding claims, **characterised in that** the cross-section of the permeable walls (1, 2) comprises a zigzag shape.

## Patentansprüche

1. Vertikaler Trockner mit:
- einer ersten durchlässigen Wand (1) und einer zweiten durchlässigen Wand (2), die dazu ausgebildet sind, ein zu trocknendes Material zwischen den beiden Wänden (1, 2) einzuschließen und den Durchtritt eines Luftstroms quer zu den beiden Wänden (1, 2) zu ermöglichen, um das eingeschlossene Material zu trocknen, wobei die beiden durchlässigen Wände (1, 2) jeweils Längsenden aufweisen, die dem Einlass und dem Auslass für das zu trocknende Material entsprechen,
- einem Halte- und Ausgabesystem (4), das in der Lage ist, das trocknende Material in dem Raum zwischen den beiden durchlässigen Wänden (1, 2) zurückzuhalten und das trocknende Material durch Schwerkraftwirkung auszugeben, wobei das Halte- und Ausgabesystem (4) an dem Längsende der durchlässigen Wände (1, 2) an dem Auslass für das getrocknete Produkt angeordnet ist,
- einem Zwangsluftsystem, das dazu ausgebildet ist, einen Luftstrom durch die durchlässigen Wände (1, 2) und das zu trocknende Material zu bewegen, wobei das Zwangsluftsystem aufweist:
- einen ersten Abschnitt (22), der sich von dem den Materialeinlass bildenden Längsende in Längsrichtung entlang der durchlässigen Wände (1, 2) erstreckt, wobei das Zwangsluftsystem dazu ausgebildet ist, den Luftstrom in eine quer zu den durchlässigen Wänden (1, 2) verlaufende Richtung zu bewegen, und
- einen zweiten Abschnitt (21), der sich von dem ersten Abschnitt (22) zu dem den Materialauslass bildenden Längsende in Längsrichtung entlang der durchlässigen Wände (1, 2) erstreckt, wobei das Zwangsluftsystem dazu ausgebildet ist, den Luftstrom in eine zu den durchlässigen Wänden (1, 2) querverlaufende Richtung zu bewegen, welche derjenigen des ersten Abschnitts (22) entgegengesetzt ist, derart, dass beide Abschnitte (21, 22) quer gerichtete Luftströme definieren,
- einer Saug- und Impellereinrichtung (7) nahe der zweiten durchlässigen Wand (2), die dazu ausgebildet ist, den Luftstrom von der ersten durchlässigen Wand (1) in Richtung der zweiten durchlässigen Wand (2) in dem zweiten Abschnitt (21) zu saugen und den Luftstrom in Richtung des ersten Abschnitts (22) des Zwangsluftsystems von der zweiten durchlässigen Wand (2) in Richtung der ersten durchlässigen Wand (1) zu blasen,
- einem ersten Wärmeübertragungselement (6), das dazu ausgebildet ist, den Luftstrom zu erwärmen, bevor dieser quer durch die durchlässigen Wände (1, 2) strömt,
- wobei das erste Wärmeübertragungselement (6) in dem ersten Abschnitt (22) des Zwangsluftsystems angeordnet ist,
**dadurch gekennzeichnet, dass** er ein zweites Wärmeübertragungselement (5) aufweist, das in dem zweiten Abschnitt (21) des Zwangsluftsystems angeordnet ist, wobei das erste und das zweite Wärmeübertragungselement (5, 6) dazu ausgebildet sind, den Luftstrom zu erwärmen, bevor dieser quer durch die durchlässigen Wände (1, 2) strömt, und wobei das Zwangsluftsystem dazu ausgebildet ist, den Luftstrom derart zu bewegen, dass die Luft durch das erste Wärmeübertragungselement (6) für eine anfängliche Trocknungsstufe des in dem ersten Abschnitt (22) befindlichen Materials erwärmt wird, wonach die Luft durch das zweite Wärmeübertragungselement (5) für eine zweite Trocknungsstufe des in dem zweiten Abschnitt (21) befindlichen Materials aufbereitet wird.

2. Vertikaler Trockner nach Anspruch 1, **dadurch gekennzeichnet, dass** das erste Wärmeübertragungselement (6) sich in Längsrichtung entlang dem ersten Abschnitt (22) des Zwangsluftsystems zu der zweiten durchlässigen Wand (2) erstreckt, und das zweite Wärmeübertragungselement (5) sich in Längsrichtung entlang dem zweiten Abschnitt (21) des Zwangsluftsystems zu der ersten durchlässigen Wand (1) erstreckt.

3. Vertikaler Trockner nach einem der Ansprüche 1 bis 2, **dadurch gekennzeichnet, dass** das Wärmeübertragungselement (5, 6) ein Wärmetauscher ist.

4. Vertikaler Trockner nach einem der vorangehenden Ansprüche, **dadurch gekennzeichnet, dass** er eine erste Stützstruktur (11) aufweist, welche die durchlässigen Wände (1, 2) stützt.

5. Vertikaler Trockner nach Anspruch 4, **dadurch gekennzeichnet, dass** er ein äußeres Gehäuse (8) aufweist, das die Stützstruktur (11) und das Zwangsluftsystem umschließt, wobei das äußere Gehäuse (8) durch elastische Einrichtungen (12) an der Stützstruktur (11) angebracht ist.

6. Vertikaler Trockner nach Anspruch 5, **dadurch gekennzeichnet, dass** er ein vibrierendes Element (10) in Verbindung mit der Stützstruktur (11) aufweist, das dazu ausgebildet ist, eine Vibration an die genannte Stützstruktur (11) zu übertragen, um das Fallen des zu trocknenden Materials zu unterstützen und das Sauberhalten der durchlässigen Wände (1, 2) zu unterstützen.

7. Vertikaler Trockner nach Anspruch 5, **dadurch gekennzeichnet, dass** das äu-ßere Gehäuse (8) einen Lufteinlass (9, 19) aufweist, der dazu ausgebildet ist, Luft von außerhalb des Gehäuses (8) einzulassen.

8. Vertikaler Trockner nach Anspruch 5, **dadurch gekennzeichnet, dass** das äu-ßere Gehäuse (8) ein in Verbindung mit dem Auslass der ersten durchlässigen Wand (1) angeordnetes Luftauslassregelventil (17) aufweist, das Luft nach außerhalb des Gehäuses (8) auslässt.

9. Vertikaler Trockner nach einem der vorangehenden Ansprüche, **dadurch gekennzeichnet, dass** er einen Trichter (3) aufweist, der geeignet ist, mit dem zu trocknenden Material befüllt zu werden und dieses Material in den Raum zwischen den durchlässigen Wänden (1, 2) einzubringen, wobei der Trichter (3) am Längsende der genannten durchlässigen Wände (1, 2) an dem Einlass für das Material angeordnet ist.

10. Vertikaler Trockner nach Anspruch 9, **dadurch gekennzeichnet, dass** der Trichter (3) einen durchlässigen Wandbereich (18) aufweist, der durchlässig ist, so dass ein Teil des Luftstroms hindurchtritt, um das zu trocknende Material vorzuwärmen.

11. Vertikaler Trockner nach einem der vorhergehenden Ansprüche, **dadurch gekennzeichnet, dass** er ein Kälteübertragungselement (20) aufweist, um durch Kondensation das in den Luftstrom absorbierte Wasser aus dem trocknenden Material zu entfernen.

12. Vertikaler Trockner nach einem der vorhergehenden Ansprüche, **dadurch gekennzeichnet, dass** der Querschnitt der durchlässigen Wände (1, 2) eine Zickzack-Form aufweist.

## Revendications

1. Séchoir vertical comprenant :
- une première paroi perméable (1) et une seconde paroi perméable (2) configurées de façon à confiner un matériau à sécher entre les deux parois (1, 2) et pour permettre le passage d'un flux d'air en travers des deux parois (1, 2) pour sécher le matériau confiné, les deux parois perméables (1, 2) comprenant deux extrémités suivant la longueur correspondant à l'entrée et à la sortie pour le matériau à sécher,
- un système de maintien et d'évacuation (4) adapté pour retenir le matériau en cours de séchage dans l'espace entre les deux parois perméables (1, 2) et pour évacuer le matériau en cours de séchage par gravité, le système de maintien et d'évacuation (4) étant situé à l'extrémité suivant la longueur des parois perméables (1, 2) au niveau de la sortie pour le produit séché,
- un système d'air forcé configuré pour déplacer un flux d'air en travers des parois perméables (1, 2) et du matériau à sécher, le système d'air forcé comprenant :
- une première section (22) qui s'étend suivant la longueur le long des parois perméables (1, 2) depuis l'extrémité suivant la longueur formant l'entrée de matériau, le système d'air forcé étant configuré pour déplacer le flux d'air dans une direction en travers des parois perméables (1, 2), et
- une seconde section (21) qui s'étend suivant la longueur le long des parois perméables (1, 2) depuis la première section (22) jusqu'à l'extrémité suivant la longueur formant la sortie de matériau, le système d'air forcé étant configuré pour déplacer le flux d'air dans une direction en travers des parois perméables (1, 2) à l'opposé de celle de la première section (22), de sorte que les deux sections (21, 22) définissent des écoulements d'air transversaux,
- un moyen d'aspiration et de turbine (7) à côté de la seconde paroi perméable (2) configuré pour aspirer le flux d'air de la première paroi perméable (1) vers la seconde paroi perméable (2) dans la seconde section (21) et pour souffler le flux d'air vers la première section (22) du système d'air forcé de la seconde paroi perméable (2) vers la première paroi perméable (1),
- un premier organe de transfert de chaleur (6) configuré pour chauffer le flux d'air avant qu'il s'écoule en travers des parois perméables (1, 2),
- le premier organe de transfert de chaleur (6) situé dans la première section (22) du système d'air forcé,
**caractérisé en ce qu'**il comprend un second organe de transfert de chaleur (5) situé dans la seconde section (21) du système d'air forcé, le premier et le second organe de transfert de chaleur (5, 6) étant configurés pour chauffer le flux d'air avant qu'il s'écoule en travers des parois perméables (1, 2) et le système d'air forcé étant configuré pour déplacer le flux d'air de sorte que l'air soit chauffé par le premier organe de transfert de chaleur (6) pendant une étape initiale de séchage du matériau situé dans la première section (22), après quoi l'air est reconditionné par le second organe de transfert de chaleur (5) pendant une seconde étape de séchage du matériau situé dans la seconde section (21).

2. Séchoir vertical, selon la revendication 1, **caractérisé en ce que** le premier organe de transfert de chaleur (6) s'étend suivant la longueur vers la seconde paroi perméable (2) le long de la première section (22) du système d'air forcé et le second organe de transfert de chaleur (5) s'étend suivant la longueur vers la première paroi perméable (1) le long de la seconde section (21) du système d'air forcé.

3. Séchoir vertical, selon l'une quelconque des revendications 1 et 2, **caractérisé en ce que** l'organe de transfert de chaleur (5, 6) est un échangeur de chaleur.

4. Séchoir vertical, selon l'une quelconque des revendications précédentes, **caractérisé en ce qu'**il comprend une première structure de support (11) qui supporte les parois perméables (1, 2).

5. Séchoir vertical, selon la revendication 4, **caractérisé en ce qu'**il comprend un logement externe (8) qui englobe la structure de support (11) et le système d'air forcé, le logement externe (8) étant fixé à la structure de support (11) par des moyens élastiques (12).

6. Séchoir vertical, selon la revendication 5, **caractérisé en ce qu'**il comprend un élément vibrant (10) en lien avec la structure de support (11) configuré pour transmettre une vibration à ladite structure de support (11) pour aider à garder le matériau à sécher en chute et pour aider à garder les parois perméables (1, 2) propres.

7. Séchoir vertical, selon la revendication 5, **caractérisé en ce que** le logement externe (8) comprend une entrée d'air (9, 19) configurée pour laisser entrer de l'air depuis l'extérieur du logement (8).

8. Séchoir vertical, selon la revendication 5, **caractérisé en ce que** le logement externe (8) comprend une vanne de commande de sortie d'air (17) située en lien avec la sortie de la première paroi perméable (1) qui laisse échapper de l'air vers l'extérieur du logement (8).

9. Séchoir vertical, selon l'une quelconque des revendications précédentes, **caractérisé en ce qu'**il comprend une trémie (3) adaptée pour être remplie du matériau à sécher et pour apporter ce matériau dans l'espace entre les deux parois perméables (1, 2), la trémie (3) étant située à l'extrémité suivant la longueur desdites parois perméables (1, 2) au niveau de l'entrée pour le matériau.

10. Séchoir vertical, selon la revendication 9, **caractérisé en ce que** la trémie (3) comprend une portion de sa paroi qui est perméable (18), de sorte qu'une partie du flux d'air passe dedans pour préchauffer le matériau à sécher.

11. Séchoir vertical, selon l'une quelconque des revendications précédentes, **caractérisé en ce qu'**il comprend un organe de transfert de froid (20) pour éliminer, par condensation, l'eau absorbée dans le flux d'air issue du matériau en cours de séchage.

12. Séchoir vertical, selon l'une quelconque des revendications précédentes, **caractérisé en ce que** la section des parois perméables (1, 2) comprend une forme en zigzag.
